# EUROPÄISCHE PATENTSCHRIFT

(11) **EP 2 066 920 B1**
(45) Veröffentlichungstag und Bekanntmachung des Hinweises auf die Patenterteilung: **14.07.2010**
(21) Anmeldenummer: 07725320.1
(22) Anmeldetag: 16.05.2007
(51) Int. Cl.: F16H 7/08, F16H 7/18

(54) **SPANNSCHIENE FÜR EINEN KETTENTRIEB MIT EINEM ÜBERBRÜCKENDEN FÜHRUNGSKANALABSCHNITT ALS AUFDRÜCKBEREICH**
TENSIONING RAIL FOR A CHAIN DRIVE WITH A BRIDGING GUIDE CHANNEL SECTION AS A PRESSING REGION
RAIL TENDEUR POUR UNE TRANSMISSION PAR CHAÎNE AVEC COMME ZONE DE PRESSION UNE PARTIE COMBLÉE DE CANAL DE GUIDAGE

(30) Priorität: 23.08.2006 DE 202006012966 U
(43) Veröffentlichungstag der Anmeldung: 10.06.2009
(73) Patentinhaber: IWIS Motorsysteme GmbH & Co. KG, 81369 München (DE)
(72) Erfinder: BODENSTEINER, Martin, 80336 München (DE); KETTERL, Sandra, 85452 Moosinning (DE); PREIS, Artur, 82110 Germering (DE); WEIKERT, Michael, 85464 Neufinsing (DE)
(74) Vertreter: Grünecker, Kinkeldey, Stockmair & Schwanhäusser Anwaltssozietät
(86) Internationale Anmeldenummer: PCT/EP2007/004405
(87) Internationale Veröffentlichungsnummer: WO 2008/022663

(56) Entgegenhaltungen:
- EP-A- 1 369 621
- DE-A1- 10 247 419
- DE-U1-202004 013 921
- JP-A- 2000 193 051

## Beschreibung

Die Erfindung betrifft eine Spannschiene für einen Kettentrieb mit einem um einen Drehpunkt schwenkbaren Tragkörper, der ein mit einer Kette in Kontakt bringbaren Führungskanal und einen von einem Spannkolben druckbeaufschlagbaren Aufdrückbereich aufweist, entsprechend dem Oberbegriff des Anspruchs 1 und wie sie aus der DE 10 247 419 A bekannt ist.

Aus dem Stand der Technik sind Spannschienen mit aufgestecktem Aufdrückbereich bekannt. Die DE 202004013921 U1 offenbart, eine Spannschiene für einen Kettentrieb, wobei die Spannschiene einen Führungskanal aufweist. Der Führungskanal ist dabei so offen ausgestaltet, dass eine Kette einfach an den beiden sich gegenüberstehenden Flanken der Spannschiene vorbeiführbar ist und in Kontakt mit einem Gleitbelagskörper steht, der auf der Unterseite des Führungskanal angebracht ist. Ein Druckstück mit einem Aufdrückbereich wird in der DE 202004013921 U1 auf die beiden Flanken des Führungskanals aufgeklipst, so dass das Druckstück den Führungskanal überbrückt. Auf den Aufdrückbereich drückt ein Spannkolben.

Spannschienen werden in Kettentrieben, insbesondere in Steuerkettentrieben, für Verbrennungsmotoren verwendet. Die Steuerketten verbinden Kurbelwellen und Nockwellen miteinander. Damit die Steuerketten ausreichend gespannt sind, um ein Herunterrutschen von an der Nockenwelle und an der Kurbelwelle angebrachten Zahnrädern zu verhindern, wird die Steuerkette über eine Spannschiene gespannt. Spannschienen haben unterschiedlichste Formen. Im vorliegenden Fall sind Spannschienen betroffen, die einen Führungskanal für die Steuerkette aufweisen, der zwischen dem Aufdrückbereich und einem Drehpunkt, um den die Spannschiene beim Spannen schwenkt, angeordnet ist.

Spannschienen sind etwa aus der US 4741299, DE 4341019 A1, US 4741299, DE 19713824 A1, DE 19713824 A1, US 4530681 und der japanischen Druckschrift JP 2005/105147 A bekannt. Die bekannten Spannschienen haben jedoch Nachteile bei der Krafteinleitung und Kraftaufnahme, da die derzeit bekannten Spannschiene nicht so robust ausgestaltet werden können. Ferner muss ein zusätzliches Bauteil nach Montage der Spannschiene im Motor auf die Spannschiene aufgebracht werden, um eine Anlagefläche für einen Spannkolben zu bilden, so dass über Einleitung von Druck, der von dem Spannkolben aufgebracht wird, auf den Aufdrückbereich der Spannschiene ein Verschwenken der Spannschiene erfolgen kann und die gewünschte Spannung in der Steuerkette erreicht wird.

Es ist Aufgabe der vorliegenden Erfindung, die aus dem Stand der Technik bekannten Nachteile zu vermeiden.

Diese Aufgabe wird mit den Merkmalen des Anspruchs 1 gelösst. Unter einer einteiligen Ausgestaltung wird ein Ausformen sowohl des Aufdrückbereichs als auch des restlichen Bereichs der Spannschiene aus einem einzigen Bauteil verstanden. Dies umfasst sowohl einen Stoffschluss als auch das Vorhandensein ein und desselben Materials in der Spannschiene, insbesondere im Aufdrückbereich als auch im restlichen Bestandteil der Spannschiene. Durch eine erfindungsgemäße Ausgestaltung wird die Spannschiene belastbarer. Es kann sowohl eine erhöhte Kettenspannung von der Spannschiene besser verkraftet werden, als auch ein höherer Druck über den Aufdrückbereich über den Spannkolben auf die Steuerkette eingebracht werden. Durch die erfindungsgemäße Ausgestaltung wird ein Bausatz, bestehend aus Spannschiene mit Aufdrückbereich und der in die Spannschiene eingefädelten Kette in den Motor einbaubar. Diese neuartige Spannschiene ersetzt herkömmliche Spannschienen und herkömmliche separate Druckstücke. Ein Vormontieren von Steuerkette und erfindungsgemäßer Spannschiene bietet sich an. Die Montagezeiten werden verringert und Kosten dadurch reduziert. Die Krafteinleitung auf die Schiene findet über ein stoffschlüssiges Bauteil statt. Im Gegensatz zu bisher bekannten zweiteiligen Lösungen ist keine Abstimmung von Toleranzen erforderlich, um eine spielfreie Verbindung zu erhalten. Über die gesamte Lebensdauer stellt sich vorteilhafterweise kein Spiel zwischen dem Aufdrückbereich und dem Spannschienenkörper ein. Die vielseitigen Gestaltungsmöglichkeiten von Spritz- und Druckgussteilen bleiben erhalten, um auf die motorseitigen Erfordernisse Rücksicht nehmen zu können. Im Speziellen ist ein Führungskanal spritzbar, durch den die offene Steuerkette fädelbar ist. Nach Einsetzen des Bausatzes aus Spannschiene und Steuerkette, wird die Steuerkette geschlossen und anschließend über den Spannkolben gespannt.

Vorteilhafte Ausgestaltungen werden in den Unteransprüchen näher beschrieben und beansprucht.

Besonders vorteilhaft ist es, wenn der Aufdrückbereich in der von dem Drehpunkt entfernten Hälfte, vorzugsweise im drehpunktfemen Drittel der Spannschiene angeordnet ist. Die auf die Steuerkette wirkenden Drücke, welche über den Spannkolben eingeleitet werden, sind ausreichend groß, um eine notwendige Kettenspannung zu erreichen, die sicherstellt, dass die Steuerkette nicht von den Kettenrädern an Kurbelwelle und Nockenwelle abspringt. Eine wartungsfreiere Spannschiene und ein ausfallsicherer Betrieb des Motors ist die Folge. Um Verwindungen in der Spannschiene zu vermeiden, ist es von Vorteil, wenn in einer weiteren Ausführungsform der Aufdrückbereich druckaufnehmend verstärkt ausgebildet ist.

Besonders gut herstellbar und von Spannkolben erreichbar ist der Aufdrückbereich in einer weiteren vorteilhaften Ausführungsform, wenn der Aufdrückbereich als Vorsprung der Spannschiene ausgebildet ist.

Die von dem Spannkolben eingeleiteten Drücke sind dann besonders gut in der Spannschiene verteilbar, ohne dass ein Abbrechen des Aufdrückbereichs die Folge ist, wenn der Vorsprung an seiner parallel zu einer Ebene, in der die Kette verläuft, ausgerichteten Seitenwandung Vertiefungen aufweist.

Wenn die Vertiefungen in Richtung des Druckaufbringens durch den Spannkolben druckoptimiert angebracht sind, werden die speziellen Kraftverläufe bei Auftreten von Druck in der Spannschiene besonders gut in dieser Ausführungsform verteilt.

Um den Verschleiß im Führungskanal zu minimieren, hat es sich als Vorteilhaft herausgestellt, wenn in einer weiteren Ausführungsform in dem Führungskanal ein Gleitbelagskörper angeordnet ist, auf dem die Kette gleitbar ist.

Wenn der Gleitbelagskörper an den Enden der Spannschiene aufgeklipst ist, so lässt sich der Gleitbelagskörper besonders schnell und einfach auf der Spannschiene anbringen. Dies reduziert die Kosten weiter.

Besonders einbaufreundliche Geometriewerte stellen sich in einer weiteren vorteilhaften Ausführungsform ein, wenn die kürzeste Entfernung des spannkolbenseitigen Endes des Aufdrückbereichs zu der Gleitbelagskörperoberfläche ca. 1/8 bis 3/8 der Entfernung des spannkolbenseitigen Endes des Aufdrückbereichs zum Drehpunkt beträgt, vorzugsweise 1/4.

Wenn die kürzeste Entfernung des spannkolbenseitigen Endes des Aufdrückbereichs von der Gleitbelagkörperoberfläche zwischen ca. sechs- und achtmal der Dicke des Gleitbelagkörpers entspricht, vorzugsweise siebenmal, so stellt sich ein weiteres vorteilhaftes Ausführungsbeispiel ein. Der Querschnitt des Führungskanals ist dann groß genug, dass eine Steuerkette mit dem notwendigen Spiel beabstandet durch die Spannschiene läuft, unter Wahrung möglichst kleiner Abmessungen, um in möglichst vielen Motoren den Einbau einer solchen erfindungsgemäßen Spannschiene zu ermöglichen.

Wenn die Höhe des Führungskanals im Bereich des geschlossenen Führungskanalabschnittes zwischen dem 1,2- und 2,1-, vorzugsweise dem 1,8-fachen der Breite des Führungskanals entspricht, so ist ein besonders optimiertes Breiten-/Höhenvefiältnis der Spannschiene die Folge.

Damit die Steuerkette nicht an einem gleitbelagfreien Rand des Führungskanals, also etwa im Aufdürckbereich, mit der Spannschiene in Kontakt gelangt, ist es in einem weiteren vorteilhaften Ausführungsbeispiel besonders positiv, wenn zwischen der gleitbelagkörperoberflächenfemen Oberseite einer in den Führungskanal einlegbaren Kette und der gleitbelagkörperoberflächennahen Unterseite des den Führungskanal überbrückenden Führungskanalabschnitts, ein Abstand von ca. 0,2 bis 1,0 der Führungskanalbreite vorliegt.

Eine besonders vorteilhafte Spannschiene liegt in einem weiteren vorteilhaften Ausführungsbeispiel vor, wenn der Aufdrückbereich eine Stahlauflage umfasst, die integral mit dem Tragkörper fest verbunden ist. Wird eine solche Stahlauflage auf der Außenseite des Vorsprungs in dem Bereich des Aufdrückbereichs an dessen Oberfläche eingebracht, so wird die Verschleißbeständigkeit der Spannschiene erhöht, da Stöße des auf den Aufdrückbereich drückenden Kolbens verschleißärmer kompensiert werden können. Auch andere Metalleinlagen sind allerdings einbringbar.

Im Folgenden wird ein Ausführungsbeispiel anhand einer Zeichnung näher erläutert. Es zeigen:
- Fig. 1: eine schematische Draufsicht auf eine Spannschiene mit einer angedeuteten Spannkette und einen auf einen Aufdrückbereich der Spannschiene drückenden Spannkolben,
- Fig. 2: eine isolierte perspektivische Ansicht der erfindungsgemäßen Spannschiene aus Figur 1, und
- Fig. 3: eine perspektivische Detailansicht des Aufdrückbereichs der Spannschiene aus den Figuren 1 und 2.

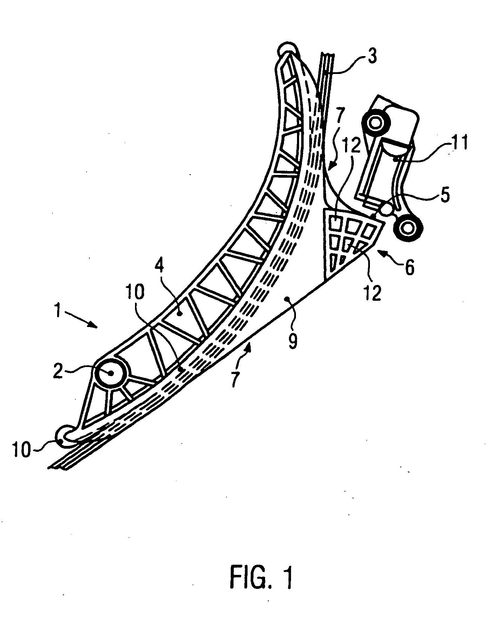

Figur 1 zeigt eine Spannschiene 1 aus spritzgießbarem Material. Die Spannschiene 1 weist einen Drehpunkt 2 auf. Die Spannschiene 1 ist steuerkettenseitig konvex ausgestaltet. Auf der steuerkettenfemen Seite ist die Spannschiene 1 konkav ausgestaltet. In Figur 1 ist die Steuerkette mit dem Bezugszeichen 3 versehen. Die Spannschiene weist einen Tragkörper 4 auf, an dem ein Aufdrückbereich 5 ausgebildet ist. Der Aufdrückbereich 5 ist Teil eines Vorsprungs 6. die Steuerkette 3 verläuft zwischen dem Drehpunkt 2 und dem Aufdrückbereich 5 des Vorsprungs 6. Der Aufdrückbereich 5 ist einteilig aus demselben Material wie der Tragkörper 4 der Spannschiene 1 gefertigt. Die Spannschiene 1 ist spritzgegossen hergestellt. Der Aufdrückbereich 5 des Vorsprungs 6 bildet einen die Steuerkette 3 überbrückenden Bereich. Während die Steuerkette 3 in einem Führungskanal 7 läuft, überbrückt dieser Bereich den Führungskanal 7. Dieser Bereich wird als Führungskanalabschnitt 8 bezeichnet. Der Drehpunkt 2 ist der Mittelpunkt einer Gleitbuchse, die in die Spannschiene 1, und zwar in den Tragkörper 4 eingearbeitet ist. Der Führungskanal 7 kann jegliche U- oder sogar L-förmige Ausgestaltung aufweisen.

Der Tragkörper 4 ist so ausgestaltet, dass er entlang einer konvex gebogenen Oberfläche zwei zueinander beabstandete Stege 9 aufweist. Die Stege 9 des Tragkörpers 4 gehen auf beiden Seiten der dazwischen hindurch verlaufenden Steuerkette 3 in den Vorsprung 6 über, der den Aufdrückbereich 5 ausformt.

Im Bereich des Vorsprungs 6, insbesondere im Aufdrückbereich 5 überbrücken die Stege 9 des Tragkörpers 4 miteinander verbunden die Steuerkette 3. Die Steuerkette 3 muss im geöffneten Zustand durch den Führungskanal 7 und unter dem Führungskanal des Abschnitts 8 hindurchgefädelt werden. Auf der Drehpunktseite des Führungskanals 7 ist ein Gleitbelagskörper 10 aufgeklipst. Der Gleitbelagskörper 10 weist an beiden Enden Vorsprünge auf, die an die Enden des Tragkörpers 4 der Spannschiene 1 geklipst sind. Ist die Steuerkette 3 in den Führungskanal 7 eingelegt, gleitet sie im Betriebszustand auf der Oberfläche des Gleitbelagkörpers 10. Ein Spannkolben 11 ist motorseitig befestigt und drückt mit einem beweglichen Zylinder auf den Aufdrückbereich 5. Drückt der Spannkolben 11 vermehrt auf den Aufdrückbereich 5, so dreht sich der Tragkörper 4 der Spannschiene 1 um den Drehpunkt 2 herum und spannt die Steuerkette 3. In Figur 1 dreht sich der Tragkörper 4, sobald erhöhte Drücke über den Spannkolben 11 auf den Vorsprung 6 und den damit integrierten Aufdruckbereich 5 ausgeübt werden, im Gegenuhrzeigersinn um den Drehpunkt 2.

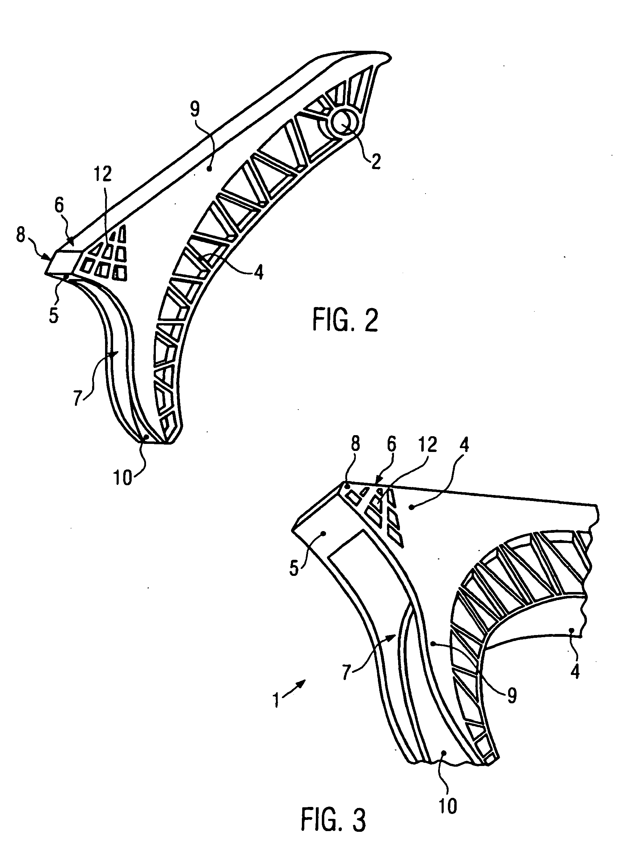

In den Figuren 2 und 3 werden dieselben Bezugszeichen verwendet wie in Figur 1, so dieselben Bauteile betroffen sind.

Die massive Ausgestaltung des Vorsprungs 6, mit dem die Steuerkette 3 überbrückenden Führungskanalabschnitt 8, der letztendlich den Aufdrückbereich 5 aufweist, ist besonders gut in diesen Figuren 2 und 3 erkennbar. Auch die fachwerkartige Ausgestaltung der Außenseite des Tragkörpers 4, und zwar vom konkaven Bereich des Tragkörpers 4 bis in den Bereich der aufliegenden Steuerkette über dem Gleitbelagskörper 10, ist in diesen Figuren gut erkennbar. Der Gleitbelagskörper 10 weist einen Gleitbelag auf der Oberfläche auf.

Im Folgenden wird die Funktionsweise der Erfindung näher beschrieben.

Die Spannschiene 1 wird im Spritzgussverfahren aus einem Stück hergestellt, wobei der Tragkörper 4 Stege 9 aufweist, die einen Vorsprung 6 bilden, der dann einen Aufdrückbereich 5 aufweist. Dieser Bereich kennzeichnet auch den Führungskanalabschnitt 8, der den Führungskanal 7 überbrückt. Die Außenseite der Stege 9 ist fachwerkartig verstrebt ausgestaltet. Auch der Vorsprung 6 ist fachwerkartig verstrebt ausgestaltet und weist Vertiefungen 12 auf. Ein Gleitbelagskörper 10 wird in den Führungskanal 7 eingeklipst. Die Steuerkette 3 wird im offenen Zustand dann durch den Führungskanal 7 geführt. Sowohl die Spannschiene 1 als auch die eingeführte, noch offene, Steuerkette 3 wird in den Motor verbracht und um die Kettenräder der Nockenwelle und Kurbelwelle gelegt. Dann wird die Steuerkette geschlossen. Ein eingebauter Spannkolben 11 drückt dann, insbesondere im Betrieb des Motors, auf den Aufdrückbereich 5 und spannt durch ein Auslenken der Spannschiene 1 um den Drehpunkt 2 die Steuerkette 3.

## Patentansprüche

1. Spannschiene (1) für einen Kettentrieb mit einem um einen Drehpunkt (2) schwenkbaren Tragkörper (4), der einen mit einer Kette (3) in Kontakt bringbaren Führungskanal (7) und einen von einem Spannkolben (11) druckbeaufschlagbaren Aufdrückbereich (5) aufweist, **dadurch gekennzeichnet, dass** der Aufdrückbereich (5) einteilig mit dem Tragkörper (4) ausgestaltet ist und der Aufdrückbereich (5) den Führungskanal (7) zumindest bereichsweise überbrückt, wodurch ein am Umfang geschlossener Abschnitt des Führungskanals (7) ausgebildet ist.

2. Spannschiene (1) nach Anspruch 1, wobei der Aufdrückbereich (5) in der von dem Drehpunkt (2) entfernten Hälfte, vorzugsweise im drehpunktfernen Drittel der Spannschiene (1) angeordnet ist.

3. Spannschiene (1) nach Anspruch 1 oder 2, wobei der Aufdrückbereich (5) druckaufnehmend verstärkt ausgebildet ist.

4. Spannschiene (1) nach Anspruch 1 bis 3, wobei der Aufdrückbereich als Vorsprung (6) der Spannschiene ausgebildet ist.

5. Spannschiene (1) nach Anspruch 4, wobei der Vorsprung (6) an seiner parallel zu einer Ebene, in der die Kette verläuft, ausgerichteten Seitenwandung Vertiefungen (12) aufweist.

6. Spannschiene (1) nach Anspruch 5, wobei die Vertiefungen (12) in Richtung des Druckaufbringens durch den Spannkolben (11) druckoptimiert angebracht sind.

7. Spannschiene (1) nach einem der vorherigen Ansprüche, wobei in dem Führungskanal (7) ein Gleitbelagskörper (10) angeordnet ist, auf dem die Kette (3) gleitbar ist.

8. Spannschiene (1) nach Anspruch (7), wobei der Gleitbelagskörper an den Enden der Spannschiene (1) aufgeklipst ist.

9. Spannschiene (1) nach einem der vorhergehenden Ansprüche, wobei die kürzeste Entfernung des spannkolbenseitigen Endes des Aufdrückbereichs (5) zu der Gleitbelagskörperoberfläche ca. 1/8 bis 3/8 der Entfernung des spannkolbenseitigen Ende des Aufdrückbereichs (5) zum Drehpunkt (2) beträgt, vorzugsweise 1/4.

10. Spannschiene (1) nach einem der vorhergehenden Ansprüche, wobei die kürzeste Entfernung des spannkolbenseitigen Endes des Aufdrückbereichs (5) von der Gleitbelagkörperoberfläche zwischen ca. sechs- und achtmal der Dicke des Gleitbelagkörpers entspricht, vorzugsweise siebenmal.

11. Spannschiene (1) nach einem der vorhergehenden Ansprüche, wobei die Höhe des Führungskanals (7) im Bereich des geschlossenen Führungskanalabschnitts (8) zwischen dem 1,2- und 2,1-, vorzugsweise dem 1,8-fachen der Breite des Führungskanals (7) entspricht.

12. Spannschiene (1) nach einem der vorhergehenden Ansprüche, wobei zwischen der gleitbelagkörperoberflächenfernern Oberseite einer in den Führungskanal (7) einlegbaren Kette (3) und der gleitbelagkörperoberflächennahen Unterseite des den Führungskanal (7) überbrückenden Führungskanalabschnitt (8), einen Abstand von ca. 0,2 bis 1,0 der Führungskanalbreite vorliegt.

13. Spannschiene (1) nach einem der vorhergehenden Ansprüche, wobei der Aufdrückbereich (5) eine Stahlauflage umfasst, die integral mit dem Tragkörper (4) fest verbunden ist.

## Claims

1. A tensioning rail (1) for a chain drive with a support body (4) which is pivotable about a center of rotation (2) and which has a guide channel (7), which can be placed in contact with a chain (3), and a pressing region (5) which can be acted on with pressure by a tensioning piston (11), **characterized in that** the pressing region (5) is formed in one piece with the support body (4) and the pressing region (5) bridges the guide channel (7) at least in a region forming a peripherally closed section of the guide channel (7).

2. The tensioning rail (1) according to claim 1, wherein the pressing region (5) is arranged in the half that is remote from the center of rotation (2), preferably in the third that is remote from the center of rotation, of the tensioning rail (1).

3. The tensioning rail (1) according to claim 1 or 2, wherein the pressing region (5) is reinforced for pressure absorption.

4. The tensioning rail (1) according to claims 1 to 3, wherein the pressing region is configured as a projection (6) of the tensioning rail.

5. The tensioning rail (1) according to claim 4, wherein the projection (6) comprises recesses (12) on its sidewall which is oriented in parallel with a plane in which the chain is running.

6. The tensioning rail (1) according to claim 5, wherein the recesses (12) are provided in a pressure-optimized fashion in the direction of the pressure applied by the tensioning piston (11).

7. The tensioning rail (1) according to any one of the preceding claims, wherein a slide lining body (10), on which the chain (3) is slidable, is arranged in the guide channel (7).

8. The tensioning rail (1) according to claim 7, wherein the slide lining body (10) is clipped onto the ends of the tensioning rail (1).

9. The tensioning rail (1) according to any one of the preceding claims, wherein the shortest distance from the end of the pressing region (5) at the tensioning piston side to the slide lining body surface is about 1/8 to 3/8 the distance of the end from the pressing region (5) at the tensioning piston side to the center of rotation (2), preferably 1/4.

10. The tensioning rail (1) according to any one of the preceding claims, wherein the shortest distance of the end of the pressing region (5) at the tensioning piston side from the slide lining body surface is between about six and eight times the thickness of the slide lining body, preferably seven times.

11. The tensioning rail (1) according to any one of the preceding claims, wherein the height of the guide channel (7) in the region of the closed guide channel section (8) is between 1.2 and 2.1, preferably 1.8 times, the width of the guide channel (7).

12. The tensioning rail (1) according to any one of the preceding claims, wherein there is a distance of about 0.2 to 1.0 times the guide channel width between the upper side of a chain (3) insertable into the guide channel (7), which upper side is remote from the slide lining body surface, and the lower side of the guide channel section (8) bridging the guide channel (7), which lower side is close to the slide lining body surface.

13. The tensioning rail (1) according to any one of the preceding claims, wherein the pressing region (5) comprises a steel plating which is integrally firmly connected with the support body (4).

## Revendications

1. Rail tendeur (1) pour une transmise par chaîne avec un corps porteur (4) pivotant autour d'un pivot (2), qui présente un canal de guidage (7) qui peut être amené en contact avec une chaîne (3) et une zone d'appui (5) sur laquelle une pression es applicable par un piston tendeur (11), **caractérisé en ce que** la zone d'appui (5) est conformée d'un seul tenant avec le corps porteur (4) et la zone d'appui (5) recouvre au moins par sections le canal de guidage (7), ce qui permet de former une section du canal de guidage (7) fermée en périphérie.

2. Rail tendeur (1) selon la revendication 1, dans lequel la zone d'appui (5) est agencée dans la moitié du rail tendeur éloignée du pivot (2), de préférence dans le tiers, du rail tendeur (1) éloigné du pivot.

3. Rail tendeur (1) selon la revendication 1 ou 2, dans lequel la zone d'appui (5) est réalisée de manière renforcée pour absorber la pression.

4. Rail tendeur (1) selon les revendications 1 à 3, dans lequel la zone d'appui est réalisée sous la forme d'une saillie (6) du rail tendeur.

5. Rail tendeur (1) selon la revendication 4, dans lequel la saillie (6) présente des évidements (12) sur sa paroi latérale orientée parallèlement à un plan, dans lequel s'étend la chaîne.

6. Rail tendeur (1) selon la revendication 5, dans lequel les évidements (12) sont ménagés de manière optimisée en pression dans la direction de l'application de pression par le piston tendeur (11).

7. Rail tendeur (1) selon l'une quelconque des revendications précédentes, dans lequel un corps de revêtement de rail (10), sur lequel peut glisser la chaîne (3) est agencé dans le canal de guidage (7).

8. Rail tendeur (1) selon la revendication (7), dans lequel le corps de revêtement est clipsé aux extrémités du rail tendeur (1).

9. Rail tendeur (1) selon l'une quelconque des revendications précédentes, dans lequel la distance la plus courte entre l'extrémité côté piston tendeur de la zone d'appui (5) et la surface de corps de revêtement de rail est d'environ 1/8 à 3/8 de la distance entre l'extrémité côté piston tendeur de la zone d'appui (5) et le pivot (2), de préférence de 1/4.

10. Rail tendeur (1) selon l'une quelconque des revendications précédentes, dans lequel la distance la plus courte entre l'extrémité côté piston tendeur de la zone d'appui (5) et la surface du corps de revêtement de rail est comprise entre environ six et huit fois l'épaisseur du corps de revêtement de rail, de préférence sept fois.

11. Rail tendeur (1) selon l'une quelconque des revendications précédentes, dans lequel la hauteur du canal de guidage (7) dans la zone de la section de canal de guidage fermée (8) est comprise entre 1,2 et 2,1, de préférence 1,8 fois la largeur du canal de guidage (7).

12. Rail tendeur (1) selon l'une quelconque des revendications précédentes, dans lequel entre la face supérieure éloignée de la surface du corps de revêtement de rail d'une chaîne (3) insérable dans le canal de guidage (7) et la face inférieure proche de la surface du corps de revêtement de la section de canal de guidage (8) recouvrant le canal de guidage (7), il existe une distance d'environ 0,2 à 1,0 fois la largeur du canal de guidage.

13. Rail tendeur (1) selon l'une quelconque des revendications précédentes, dans lequel la zone d'appui (5) comprend une pièce d'appui en acier, qui est raccordée fixe d'un seul tenant avec le corps porteur (4).
